# EUROPEAN PATENT APPLICATION

(11) **EP 4 825 644 A1**
(43) Date of publication of application: **21.10.2026**
(21) Application number: 24904428.0
(22) Date of filing: 13.12.2024
(51) Int. Cl.: B60L 53/60, B60L 58/15, B60L 53/12, H02J 50/10, H02J 50/80, H02J 7/00

(54) **WIRELESS CHARGING METHOD FOR ELECTRIC VEHICLE AND APPARATUS THEREFOR**

(30) Priority: 15.12.2023 KR 20230182886; 25.10.2024 KR 20240147687
(71) Applicant: LG Innotek Co., Ltd., Seoul 07796 (KR)
(72) Inventor: KIM, Seo Jin, Seoul 07796 (KR); CHO, Byung Geuk, Seoul 07796 (KR)
(74) Representative: Plasseraud IP
(86) International application number: PCT/KR2024/096922
(87) International publication number: WO 2025/127863

(57) **Abstract**

A method for receiving power by a driving vehicle according to an embodiment of the present invention may include the steps of: identifying a state of a battery in a vehicle; identifying whether the identified state of the battery is an overcharged state; transmitting information related to the identified state of the battery to a power supply system when the identified state of the battery is the overcharged state; determining whether the battery in the vehicle is in a chargeable state; transmitting information on the amount of power being used by the vehicle to the power supply system when it is determined that the battery is in the chargeable state; and receiving power supplied from the power supply system on the basis of the transmitted information on the amount of power being used by the vehicle, wherein the amount of power supplied from the power supply system may not be greater than the amount of power being used by the vehicle.

## Description

### [Technical Field]

The present invention relates to a wireless charging method for an electric vehicle and an apparatus therefor, and more specifically, to a wireless charging method in consideration of overcharge of an electric vehicle and an apparatus therefor.

### [Background Art]

A power supply system (or, wireless charging system) for an electric vehicle includes a power supply apparatus, a ground assembly, and a vehicle assembly. An electric vehicle may be charged by receiving power while parked or stopped and may receive power while traveling. When the electric vehicle is charged while parked or stopped, a static wireless power transfer method may be used, and when the electric vehicle is charged while traveling, a dynamic wireless power transfer method may be used.

In the static wireless power transfer method, a ground assembly may be disposed on the ground of a parking lot, and a battery in a parked or stopped electric vehicle may be charged through a vehicle assembly disposed in the electric vehicle. In the static wireless power transfer method, a wireless charging system generally controls wireless charging of one electric vehicle at a time and may charge the electric vehicle for a relatively long time.

However, in the dynamic wireless power transfer method, a ground assembly is disposed on a road, charging may be performed through the vehicle assembly disposed in the electric vehicle while the electric vehicle travels. In the dynamic wireless power transfer method, the wireless charging system may simultaneously control wireless charging of several electric vehicles, and since the electric vehicles travel, the charging of the electric vehicles is controlled for a relatively short time. Accordingly, it may be difficult for the wireless charging system to control each electric vehicle.

That is, when the charging of the electric vehicle can be individually controlled through, for example, the static wireless power transfer method, the wireless charging system may consider overcharge of the battery in the electric vehicle. However, when a plurality of vehicles are simultaneously controlled through, for example, the dynamic wireless power transfer method, it may be difficult for the wireless charging system to consider overcharge of the battery in each electric vehicle.

### [Description of Invention]

### [Technical Problem]

Various technical objects of the present invention are to provide a wireless charging method capable of charging an electric vehicle without overcharge while the electric vehicle travels and an apparatus therefor.

Various technical objects of the present invention are to provide a wireless charging method capable of safely receiving power while an electric vehicle travels and an apparatus therefor.

Various technical objects of the present invention are to provide a method capable of receiving power by as much as used power when an electric vehicle is already charged and an apparatus therefor.

In addition, various technical objects of the present invention are not limited to above-described technical objects, and there may be other technical objects.

### [Technical Solution]

A power receiving method of a traveling vehicle according to an embodiment of the present invention includes identifying a state of a battery in a vehicle, identifying whether the identified state of the battery is an overcharged state, transmitting information on the identified state of the battery to a power supply system when the identified state of the battery is the overcharged state, determining whether the battery in the vehicle is in a chargeable state, transmitting information on an amount of power being used by the vehicle to the power supply system when the battery is determined to be in the chargeable state, and receiving power from the power supply system based on the transmitted information on the amount of power being used by the vehicle, wherein an amount of power received from the power supply system is not greater than the amount of power being used by the vehicle.

In the power receiving method of a traveling vehicle according to the embodiment of the present invention, the identifying of whether the identified state of the battery is in the overcharged state may be identifying whether an amount of charge in the battery is greater than an amount of charge in the battery predetermined as an amount of overcharge.

The power receiving method of a traveling vehicle according to the embodiment of the present invention may further include, when the battery is determined not to be in the chargeable state, identifying an amount of power currently being used by the vehicle, redetermining whether the battery is in the chargeable state, transmitting information on the amount of power currently being used by the vehicle and an amount of power used by the vehicle in a state in which the battery is not chargeable to the power supply system when the battery is redetermined to be in the chargeable state, and receiving power from the power supply system based on the information on the transmitted amount of power, wherein an amount of power received from the power supply system may not be greater than a sum of the amount of power currently being used by the vehicle and the amount of power used by the vehicle in the state in which the battery is not chargeable.

The power receiving method of a traveling vehicle according to the embodiment of the present invention may further include identifying whether the state of the battery in the vehicle is an overcharged state due to the amount of power received from the power supply system, transmitting information on the amount of power being used by the vehicle to the power supply system when the identified state of the battery is the overcharged state, and receiving power from the power supply system based on the transferred information on the amount of power being used by the vehicle.

In the power receiving method of a traveling vehicle according to the embodiment of the present invention, the battery in the vehicle may receive the amount of power from the power supply system in a constant current method.

In the power receiving method of a traveling vehicle according to the embodiment of the present invention, the determining of whether the battery in the vehicle is in the chargeable state may be determining whether the power is physically supplied from the power supply system regardless of an amount of remaining charge in the battery.

In the power receiving method of a traveling vehicle according to the embodiment of the present invention, the information on the amount of power being used by the vehicle may include an amount of current consumed by the vehicle.

A power receiving method of a traveling vehicle according to an embodiment of the present invention includes identifying a state of a battery in a vehicle, transmitting information on the identified state of the battery to a power supply system, wherein the information on the state of the battery includes information on whether the battery is overcharged, determining whether the battery in the vehicle is in a chargeable state, transmitting information on an amount of power being used by the vehicle to the power supply system when the battery is determined to be in the chargeable state, and receiving power from the power supply system based on the transmitted information on the amount of power being used by the vehicle, wherein an amount of power received from the power supply system is not greater than the amount of power being used by the vehicle.

An apparatus for wireless charging of an electric vehicle according to an embodiment of the present invention includes a coil, a battery, a communication part, and a controller that performs control so that a state of the battery in a vehicle is identified, whether the identified state of the battery is an overcharged state is identified, information on the identified state of the battery is transmitted to a power supply system using the communication part when the identified state of the battery is the overcharged state, whether the battery in the vehicle is in a chargeable state is determined, information on an amount of power being used by the vehicle is transmitted to the power supply system using the communication part when the battery is determined to be in the chargeable state, and power is received from the power supply system through the coil based on the information on the amount of power being used by the vehicle, wherein an amount of power received from the power supply system is not greater than the amount of power being used by the vehicle.

In the apparatus for wireless charging of an electric vehicle according to the embodiment of the present invention, the controller may identify whether an amount of charge in the battery is greater than an amount of charge in the battery predetermined as an amount of overcharge.

In the apparatus for wireless charging of an electric vehicle according to the embodiment of the present invention, when the battery is determined not to be in the chargeable state, the controller may identify an amount of power currently being used by the vehicle, redetermine whether the battery is in the chargeable state, transmit information on the amount of power currently being used by the vehicle and an amount of power used by the vehicle in a state in which the battery is not chargeable to the power supply system using the communication part when the battery is redetermined to be in the chargeable state, and receive power from the power supply system through the coil based on the transmitted information on the amount of power.

In the apparatus for wireless charging of an electric vehicle according to the embodiment of the present invention, the controller may identify the battery in the vehicle is in an overcharged state due to the amount of power received from the power supply system, transmit information on an amount of power being used by the vehicle to the power supply system using the communication part when the identified state of the battery is the overcharged state, and receive power from the power supply system through the coil based on the information on the amount of power being used by the vehicle.

In the apparatus for wireless charging of an electric vehicle according to the embodiment of the present invention, the battery in the vehicle may receive the amount of power from the power supply system in a constant current method.

In the apparatus for wireless charging of an electric vehicle according to the embodiment of the present invention, the controller may determine whether the battery is in a state in which the power is physically received from the power supply system regardless of an amount of remaining charge in the battery.

In the apparatus for wireless charging of an electric vehicle according to the embodiment of the present invention, the information on the amount of power being used by the vehicle may include an amount of current consumed by the vehicle.

### [Advantageous Effects]

According to the present invention, an electric vehicle can safely receive power even when traveling on a road.

According to the present invention, a user can request power supply from a power supply system without considering overcharge of an electric vehicle.

According to the present invention, an electric vehicle can maintain a constant amount of charge in a battery because the battery can be charged with power by as much as used power even when the battery is charged.

According to the present invention, a power supply system can supply power to a plurality of electric vehicles without changing a charging method.

In addition, the effects of the present invention are not limited to those mentioned above, and other effects that are not mentioned will be clearly understood by those skilled in the art from the following description.

### [Description of Drawings]

FIG. 1 is a block diagram illustrating an example in which a power supply system supplies power to a traveling electric vehicle according to one embodiment of the present invention.
FIG. 2 is a block diagram illustrating internal structures of a power supply system that transmits power and an electric vehicle according to one embodiment of the present disclosure.
FIGS. 3A and 3B are block diagrams each illustrating power supplied to a motor according to whether a traveling electric vehicle is charged according to one embodiment of the present invention.
FIG. 4 is a flowchart illustrating that an electric vehicle receives power from a power supply system according to one embodiment of the present invention.
FIG. 5 is a flowchart for supplying power to a traveling electric vehicle according to one embodiment of the present invention.

### [Modes of the Invention]

Hereinafter, examples of the present disclosure will be described in detail with reference to the accompanying drawings.

However, the technical spirit of the present disclosure is not limited to some of the described examples, but may be implemented in various different forms, and one or more of the components among the examples may be used by being selectively coupled or substituted without departing from the scope of the technical spirit of the present disclosure.

In addition, terms (including technical and scientific terms) used in examples of the present disclosure may be construed as meaning that may be generally understood by those skilled in the art to which the present disclosure pertains unless explicitly specifically defined and described, and the meanings of the commonly used terms, such as terms defined in a dictionary, may be construed in consideration of contextual meanings of related technologies.

In addition, the terms used in the examples of the present disclosure are for describing the examples and are not intended to limit the present disclosure.

In the present specification, unless specifically indicated otherwise by the context, singular forms include plural forms, and in a case in which "at least one (or one or more) among A, B, and C" is described, this may include at least one combination among all possible combinations of A, B, and C.

In addition, terms such as first, second, A, B, (a), (b), and the like may be used to describe components of the examples of the present disclosure.

These terms are only for the purpose of distinguishing one component from another component, and the nature, sequence, order, and the like of the corresponding components are not limited by these terms.

In addition, when a certain component is described as being "connected," "coupled," or "joined" to another component, it may include a case in which the certain component is directly connected, coupled, or joined to another component, but also a case in which the certain component is "connected," "coupled," or "joined" to another component by still another component present between the certain component and another component.

In addition, when the certain component is described as being formed or disposed "on (above) or below (under)" another component, "on (above)" or "below (under)" may include not only a case in which two components are in direct contact with each other, but also a case in which one or more other components are formed or disposed between the two components. In addition, when described as "on (above) or below (under)," it may include the meaning of not only an upward direction but also a downward direction based on one component.

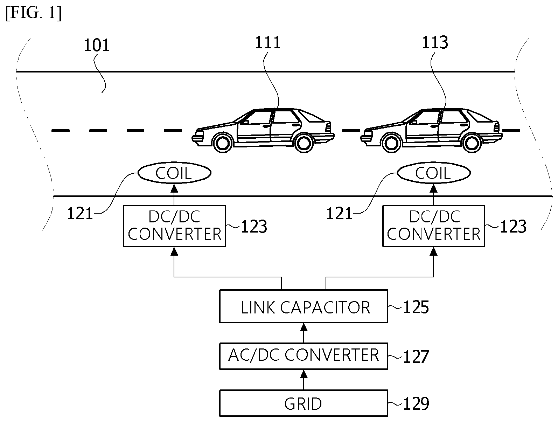

FIG. 1 is a block diagram illustrating an example in which a power supply system supplies power to a traveling electric vehicle according to one embodiment of the present invention.

Referring to FIG. 1, at least some parts of a power supply system may be installed on a road 101 in order to supply power to a traveling electric vehicle. For example, the power supply system may include a coil 121, a DC/DC converter 123, a link capacitor 125, and an AC/DC converter 127 but is not limited to those described above. The AC/DC converter 127 may receive power from a grid 129. The AC/DC converter 127 may convert AC power (or voltage or current) received from the grid 129 into DC power. The link capacitor 125 may serve as an intermediate buffer between an input and an output, and the DC/DC converter 123 may convert the DC power (or voltage or current) into DC power. The DC/DC converter 123 may transfer the converted power to the coil 121, power may be generated in a coil disposed in the electric vehicle by the power transferred to the coil 121, and thus a battery of the electric vehicle may be charged. In addition to the components illustrated in FIG. 1, the power supply system may include a communication part (not shown) and the like. The communication part included in the power supply system may perform communication with the electric vehicle and/or a server.

According to one embodiment, when the coil 121 disposed in the road 101 and the coil disposed in the electric vehicle are disposed in a predetermined region, the power may be transferred. In FIG. 1, since a first electric vehicle 111 is positioned between coils 121 disposed in the road 101, the first electric vehicle 111 may not be in a chargeable state, and since a second electric vehicle 113 is positioned above the coil 121 disposed in the road 101, the second electric vehicle 113 may be in a chargeable state. A distance between the coils 121 disposed in the road may be constant but is not limited to that described above. In addition, the distance between the coils 121 may be changed according to a location or type of the road.

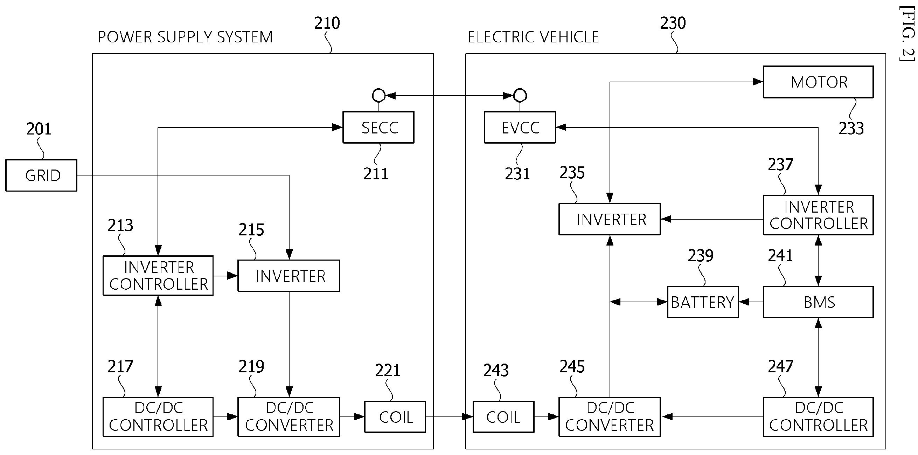

FIG. 2 is a block diagram illustrating internal structures of a power supply system that transmits power and an electric vehicle according to one embodiment of the present disclosure.

Referring to FIG. 2, a power supply system 210 may receive power from a grid 201, and an electric vehicle 230 may receive the power from the power supply system 210. The grid 201 may be a term covering a power network, a power infra, or the like and may refer to all components that supply the power to the power supply system 210.

According to one embodiment, the power supply system 210 may include a supply equipment communication controller (SECC) 211, an inverter controller 213, an inverter 215, a DC/DC controller 217, a DC/DC converter 219, and a coil 221. The SECC 211 may be a component responsible for communication in the power supply system 210 and may be referred to as a communication part. The SECC 211 may communicate with the electric vehicle 230 to transmit and receive necessary information. For example, the SECC 211 may receive a message that requests charging from the electric vehicle 230 or the like and transmit information on power to be supplied to the electric vehicle 230. In addition, the SECC 211 may transmit the received information to the inverter controller 213. The inverter 215 may convert power received from the grid 201 based on a control of the inverter controller 213. That is, the inverter 215 may convert AC power received from the grid 201 into DC power and transfer the converted DC power to the DC/DC converter 219. The DC/DC converter 219 may convert the DC power into other DC power based on a control of the DC/DC controller 217. The DC/DC converter 219 may transfer the converted power to the coil 221, and the power transferred to the coil 221 may generate power in a coil 243 of the electric vehicle 230.

In FIG. 2, the inverter controller 213 and the DC/DC controller 217 of the power supply system 210 have been separately described. However, the inverter controller 213 and the DC/DC controller 217 may be implemented as one component, such as, a controller. The controller may entirely control the components in the power supply system 210.

According to one embodiment, the electric vehicle 230 may include an electric vehicle communication controller (EVCC) 231, a motor 233, an inverter 235, an inverter controller 237, a battery 239, a battery management system (BMS) 241, a DC/DC controller 247, a DC/DC converter 245, and the coil 243. The EVCC 231 may be a component that performs communication with the power supply system 210 in order for the electric vehicle 230 to receive power and may be referred to as a communication part. Specifically, the EVCC 231 may communicate with the SECC 211 of the power supply system 210, request necessary information, and transmit requested information. The EVCC 231 may transmit received information to the inverter controller 237. The inverter controller 237 may control the inverter 235 based on a request or control of the EVCC 231 and the BMS 241, and the inverter 235 may receive power from the battery 239 or the DC/DC converter 245 and transfer the received power to the motor 233. That is, the inverter 235 may convert DC power received from the battery 239 or the DC/DC converter 245 into AC power needed for the motor 233. The BMS 241 may be a system that manages the battery 239, may monitor the battery 239, and may manage a lifetime, performance, safeness of the battery 239 by controlling the inverter controller 237 and the DC/DC controller 247 to control a voltage/current output from the battery 239 and a voltage/current input to the battery 239. The DC/DC converter 245 may convert power transferred from the coil 243 into DC power according to a control of the DC/DC controller 247, and the power transferred from the coil 243 may be power generated by the coil 221 of the power supply system 210.

In the FIG. 2, the inverter controller 237, the BMS 241, and the DC/DC controller 247 of the electric vehicle 230 have been separately described. However, the inverter controller 237, the battery management system BMS 241, and the DC/DC controller 247 may be implemented as one component such as a controller. The controller may control entire components of the electric vehicle 230 described in the present discloser.

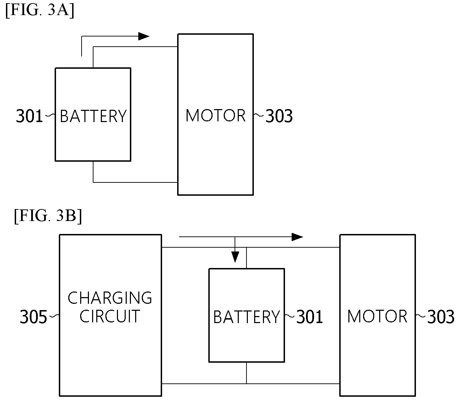

FIGS. 3A and 3B are block diagrams each illustrating power supplied to a motor according to whether a traveling electric vehicle is charged according to one embodiment of the present invention.

Specifically, FIG. 3A is a block diagram illustrating a power source of a traveling electric vehicle that is not being charged, and FIG. 3B is a block diagram illustrating the power source of the traveling electric vehicle that is being charged.

Referring to FIG. 3A, a motor 303 of the electric vehicle that is not being charged may receive power form the battery 301. The electric vehicle may drive the motor 303 using the power charged in the battery 301.

Referring to FIG. 3B, the travelling electric vehicle may charge the battery 301 and also drive the motor 303 when being charged. The electric vehicle may receive power from the outside and supply the power to the battery 301 and the motor 303 through an internal charging circuit 305. According to one embodiment, the electric vehicle may use the power received from the outside only to drive the motor 303 when an amount of remaining charge in the battery is sufficient, and the battery is determined to be in an overcharged state.

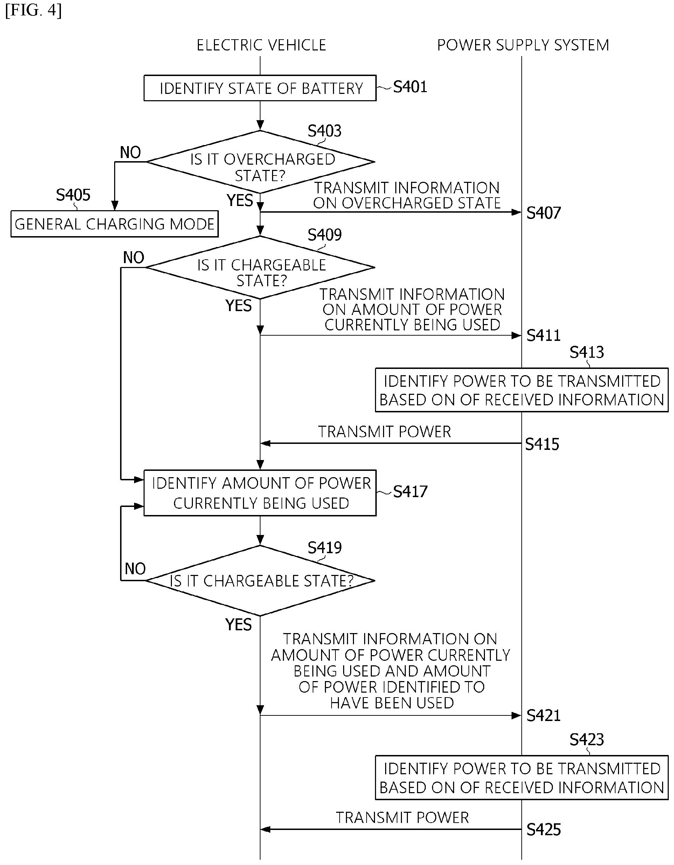

FIG. 4 is a flowchart illustrating that an electric vehicle receives power from a power supply system according to one embodiment of the present invention.

Referring to FIG. 4, when a traveling electric vehicle is identified as being in a chargeable state, first, the electric vehicle may identify a state of a battery (S401). The state of the battery may be a state related to charging of the battery and may show at least one of whether the battery is currently being charged, an amount of remaining charge in the battery, the total number of charging cycles of the battery, and whether the battery is in an overcharged state.

The electric vehicle may determine whether the state of the battery is an overcharged state (S403). For example, the electric vehicle may determine whether the battery is overcharged based on the identified state of the battery. Information on whether the battery is overcharged may be included in the previously identified state of the battery, or the electric vehicle may directly determine whether the battery is in the overcharged state. When the electric vehicle may identify information on an amount of remaining charge in the battery, the electric vehicle may determine whether the battery is overcharged by comparing the information with an amount of remaining charge in the battery that is predetermined as an amount of overcharge. That is, when the amount of remaining charge in the battery included in the identified state of the battery is greater than the amount of remaining charge in the battery that is predetermined as the amount of overcharge, the battery may be determined as the overcharge.

When the electric vehicle is determined not to be overcharged, the electric vehicle may perform charging in a general charging mode (S405). The general charging mode may refer to a mode in which the battery is charged in a state other than an overcharged state.

When the battery is determined to be in an overcharged state, the electric vehicle may transmit the overcharged state to the power supply system. Specifically, the electric vehicle may transmit information indicating the overcharged state of the battery or transmit information on the state of the battery including the overcharged state of the battery (S407).

Then, the electric vehicle may determine whether the battery is in a chargeable state (S409). Since the electric vehicle is traveling, whether the electric vehicle is chargeable may be changed. For example, when the electric vehicle is being charged through a coil disposed in a road, the electric vehicle may or may not be positioned above the coil in the road. When the traveling electric vehicle is positioned on the coil in the road, the electric vehicle may be in a chargeable state. However, when the electric vehicle is positioned at a position other than a position above the coil, the electric vehicle may be in a charging impossible state.

When the electric vehicle is determined to be chargeable, the electric vehicle may transmit information on an amount of power currently being used to the power supply system (S411). An amount of power used by the electric vehicle may be an amount of power used by the motor but is not limited thereto. For example, an amount of power used by other components other than the motor may be included in the amount of power currently being used.

The power supply system may identify power to be transferred to the electric vehicle based on the information transmitted from the electric vehicle (S413). The power supply system may determine power to be transferred to the electric vehicle by further referring to the previously transmitted information on whether the electric vehicle is in the overcharged state. The power supply system may supply the power to the electric vehicle in a constant current method. That is, the power supply system may supply the power to the electric vehicle in a method of maintaining a constant current.

The power supply system may transfer power based on the identified power (S415). The power supply system may transfer power by as much as only an amount of power being used by the electric vehicle. Since the power supply system does not transfer an amount of power greater than the amount of power used by the electric vehicle, the power supply system may prevent the battery of the electric vehicle from being charged any more. When the battery of the electric vehicle is overcharged, since a lifetime of the battery may decrease, and a fire risk may increase, the power supply system may supply only a power usage amount in order to prevent the lifetime of the battery from decreasing and the fire risk from increasing when the battery of the electric vehicle is overcharged.

When the electric vehicle is determined not to be in the chargeable state, the electric vehicle may identify an amount of power currently being used (S417). Since the electric vehicle is not chargeable, the motor may be driven using power charged in the battery. The electric vehicle may identify power currently used by the electric vehicle by identifying an extent of a change in amount of remaining charge in the battery.

The electric vehicle may determine again whether the battery is in a chargeable state (S419). Since the electric vehicle is traveling, whether the battery is chargeable may be changed. When the electric vehicle is not in the chargeable state as a result of the redetermination, the electric vehicle may continuously identify an amount of power currently being used.

However, when the electric vehicle is in a chargeable state, the electric vehicle may transmit information on an amount of power currently being used and an identified amount of used power to the power supply system (S421).

The power supply system may identify power to be transferred to the electric vehicle based on the information transmitted from the electric vehicle (S423). The power supply system may determine the sum of the amount of power currently being used and the identified amount of used power of the electric vehicle as an amount of power to be transferred to the electric vehicle.

The power supply system may transfer the power according to the previously identified amount of power to be transferred (S425).

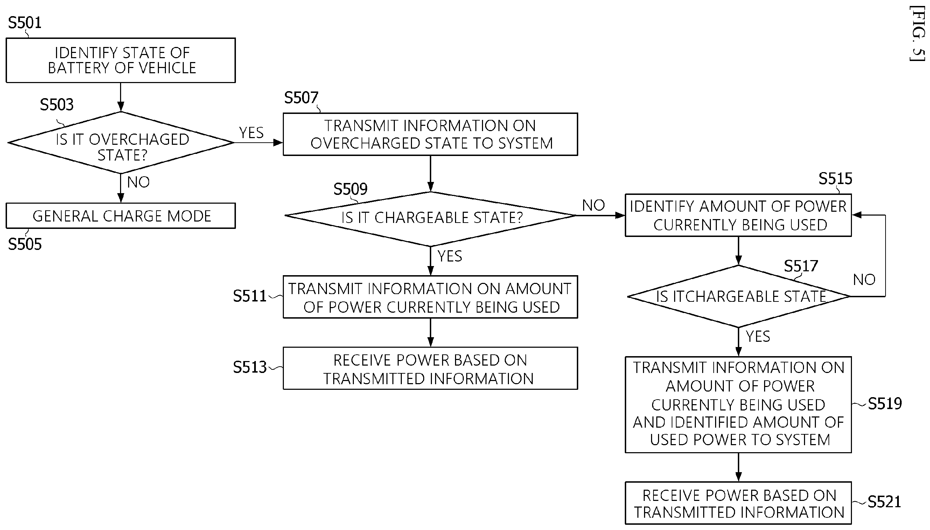

FIG. 5 is a flowchart for supplying power to a traveling electric vehicle according to one embodiment of the present invention.

According to one embodiment, an electric vehicle, that is, a vehicle, may identify or determine whether being chargeable while traveling through a sensor, a user's input, or communication with a system connected to the vehicle when entering a chargeable road.

Referring to FIG. 5, the vehicle may identify a state of a battery (S501). For example, the state of the battery may be at least one of whether the battery is currently being charged, an amount of remaining charge in the battery, the number of charging times of the battery, and whether the battery is overcharged. According to one embodiment, a BMS that manages the battery may be separately disposed in the vehicle, and the BMS may identify the state of the battery

The vehicle may determine whether the battery is in an overcharged state based on the identified state of the battery (S503). For example, when the identified state of the battery directly includes whether the battery is overcharged, the vehicle may directly identify whether the battery is overcharged. When the identified state of the battery includes an amount of remaining charge in the battery without including whether the battery is overcharged, the vehicle may determine whether the battery is currently overcharged by comparing an amount of remaining charge in the battery predetermined as an amount of overcharge with the amount of remaining charge in the battery included in the state of the battery. That is, when the amount of remaining charge in the battery include in the identified state of the battery is greater than the amount of the remaining charge in the battery predetermined as the amount of overcharge, the vehicle may determine as being overcharged.

When the vehicle determines that the battery is not in the overcharged state, the vehicle may communicate with a power supply system to perform charging in a general charging mode (S505). For example, the general charging mode may be a mode in which the battery in the vehicle is charged without a specific limitation.

When the vehicle determines that the battery is in the overcharged state, the vehicle may transmit information on the overcharged state of the battery to the power supply system (S507). For example, the vehicle may transmit information indicating the overcharged state of the battery or transmit information on a state of the battery including the overcharged state of the battery.

The vehicle may determine whether the battery is in a chargeable state even when the battery is in the overcharged state (S509). Since the vehicle is traveling, a position of the vehicle may be changed on a road, and thus the vehicle may or may not be in a chargeable state. For example, when the vehicle is charged through a coil, and a coil included in the vehicle and a coil installed in the road are positioned in a predetermined range, the vehicle may be determined to be chargeable, and when the coils are not positioned in the predetermined range, the vehicle may be determined not to be chargeable.

When the vehicle is determined to be chargeable, the vehicle may transmit information on an amount of power currently being used by the vehicle to the power supply system (S511). The amount of power currently used by the vehicle may be an amount of power consumed by a motor of the vehicle. In addition, the amount of power currently used by the vehicle may include an amount of power consumed by other components other than the motor. The vehicle may identify the amount of power currently being used and transmit information on the amount of power currently being used to the power supply system.

Then, the vehicle may receive power from the power supply system based on the transmitted information (S513). The vehicle may receive power by as much as the power usage amount previously identified from the power supply system so that an amount of remaining charge in the battery may not increase. In addition, the power supply system may supply the power to the electric vehicle in a constant current method so that an overcurrent may not flow in the electric vehicle.

When the vehicle is determined not to be in a chargeable state, the vehicle may identify an amount of power currently being used by the vehicle (S515). In this case, since the vehicle is not in a chargeable state, the vehicle may use power charged in the battery. That is, the vehicle may identify an amount of power consumed from the power charged in the battery.

The vehicle may be identified again whether currently being in a chargeable state (S517). As described above, since the vehicle is traveling, a position of the vehicle is changed, and thus the vehicle may be changed into a chargeable state. When the vehicle is not in the chargeable state, an amount of power currently being used may be continuously identified.

When the vehicle is determined to be in a chargeable state, the vehicle may transmit information on an amount of power currently being used and an identified amount of used power to the power supply system (S519).

Then, the vehicle may receive power based on the transmitted information from the power supply system (S521). The vehicle may receive the power which is the sum of the identified amount of power currently being used and the identified amount of used power from the power supply system. Accordingly, the vehicle can prevent an overcharged state of the battery.

While the present invention has been mainly described above with reference to the embodiments, it will be understood by those skilled in the art that the present invention is not limited to the embodiments, the embodiments are only exemplary, and various modifications and applications, which are not exemplified above, may be made within the range of the present invention without departing from the essential features of the present embodiments. For example, components specifically described in the embodiments may be implemented with modifications. In addition, it should be interpreted that differences related to such modifications and applications fall within the scope of the present invention defined by the appended claims.

## Claims

1. A power receiving method of a traveling vehicle, comprising:
identifying a state of a battery in a vehicle;
identifying whether the identified state of the battery is an overcharged state;
transmitting information on the identified state of the battery to a power supply system when the identified state of the battery is the overcharged state;
determining whether the battery in the vehicle is in a chargeable state;
transmitting information on an amount of power being used by the vehicle to the power supply system when the battery is determined to be in the chargeable state; and
receiving power from the power supply system based on the transmitted information on the amount of power being used by the vehicle,
wherein an amount of power received from the power supply system is not greater than the amount of power being used by the vehicle.

2. The power receiving method of claim 1, wherein the identifying of whether the identified state of the battery is in the overcharged state includes identifying whether an amount of charge in the battery is greater than an amount of charge in the battery predetermined as an amount of overcharge.

3. The power receiving method of claim 1, further comprising:
when the battery is determined not to be in the chargeable state, identifying an amount of power currently being used by the vehicle;
redetermining whether the battery is in the chargeable state;
transmitting information on the amount of power currently being used by the vehicle and an amount of power used by the vehicle in a state in which the battery is not chargeable to the power supply system when the battery is redetermined to be in the chargeable state; and
receiving power from the power supply system based on the information on the transmitted amount of power,
wherein an amount of power received from the power supply system is not greater than a sum of the amount of power currently being used by the vehicle and the amount of power used by the vehicle in the state in which the battery is not chargeable.

4. The power receiving method of claim 3, further comprising:
identifying whether the state of the battery in the vehicle is an overcharged state due to the amount of power received from the power supply system;
transmitting information on the amount of power being used by the vehicle to the power supply system when the identified state of the battery is the overcharged state; and
receiving power from the power supply system based on the transferred information on the amount of power being used by the vehicle.

5. The power receiving method of claim 1, wherein the battery in the vehicle receives the amount of power from the power supply system in a constant current method.

6. The power receiving method of claim 1, wherein the determining of whether the battery in the vehicle is in the chargeable state includes determining whether the power is physically supplied from the power supply system regardless of an amount of remaining charge in the battery.

7. The power receiving method of claim 1, wherein the information on the amount of power being used by the vehicle includes an amount of current consumed by the vehicle.

8. A power receiving method of a traveling vehicle, comprising:
identifying a state of a battery in a vehicle;
transmitting information on the identified state of the battery to a power supply system, wherein the information on the state of the battery includes information on whether the battery is overcharged;
determining whether the battery in the vehicle is in a chargeable state;
transmitting information on an amount of power being used by the vehicle to the power supply system when the battery is determined to be in the chargeable state; and
receiving power from the power supply system based on the transmitted information on the amount of power being used by the vehicle,
wherein an amount of the power received from the power supply system is not greater than the amount of power being used by the vehicle.

9. An apparatus for wireless charging of an electric vehicle, comprising:
a coil;
a battery;
a communication part; and
a controller that performs control so that a state of the battery in a vehicle is identified, whether the identified state of the battery is an overcharged state is identified, information on the identified state of the battery is transmitted to a power supply system using the communication part when the identified state of the battery is the overcharged state, whether the battery in the vehicle is in a chargeable state is determined, information on an amount of power being used by the vehicle is transmitted to the power supply system using the communication part when the battery is determined to be in the chargeable state, and power is received from the power supply system through the coil based on the information on the amount of power being used by the vehicle,
wherein an amount of power received from the power supply system is not greater than the amount of power being used by the vehicle.

10. The apparatus of claim 9, wherein the controller identifies whether an amount of charge in the battery is greater than an amount of charge in the battery predetermined as an amount of overcharge.

11. The apparatus of claim 9, wherein, when the battery is determined not to be in the chargeable state, the controller identifies an amount of power currently being used by the vehicle, redetermines whether the battery is in the chargeable state, transmits information on the amount of power currently being used by the vehicle and an amount of power used by the vehicle in a state in which the battery is not chargeable to the power supply system using the communication part when the battery is redetermined to be in the chargeable state, and receives power from the power supply system through the coil based on the transmitted information on the amount of power.

12. The apparatus of claim 11, wherein the controller identifies the battery in the vehicle is in an overcharged state due to the amount of power received from the power supply system, transmits information on an amount of power being used by the vehicle to the power supply system using the communication part when the identified state of the battery is the overcharged state, and receives power from the power supply system through the coil based on the information on the amount of power being used by the vehicle.

13. The apparatus of claim 9, wherein the battery in the vehicle receives the amount of power from the power supply system in a constant current method.

14. The apparatus of claim 9, wherein the controller determines whether the battery is in a state in which the power is physically received from the power supply system regardless of an amount of remaining charge in the battery.

15. The apparatus of claim 9, wherein the information on the amount of power being used by the vehicle includes an amount of current consumed by the vehicle.
